Europäisches Patentamt

European Patent Office

Office européen des brevets

(11) Veröffentlichungsnummer: **0 170 186 B1**

(12) **EUROPÄISCHE PATENTSCHRIFT**

(45) Veröffentlichungstag der Patentschrift: **11.09.91**

(51) Int. Cl.⁵: **H01H 85/30**

(21) Anmeldenummer: **85109152.0**

(22) Anmeldetag: **22.07.85**

(54) **Elektrische Sicherungseinrichtung mit einem Schmelzleiter.**

(30) Priorität: **02.08.84 DE 3428560**

(43) Veröffentlichungstag der Anmeldung:
**05.02.86 Patentblatt 86/06**

(45) Bekanntmachung des Hinweises auf die
Patenterteilung:
**11.09.91 Patentblatt 91/37**

(84) Benannte Vertragsstaaten:
**AT CH DE FR GB IT LI NL**

(56) Entgegenhaltungen:
EP-A- 0 013 280       BE-A- 668 548
DE-A- 1 463 655       DE-A- 2 912 361
FR-A- 2 338 565       GB-A- 1 039 891

(73) Patentinhaber: **Jean Müller GmbH Elektrotechnische Fabrik
Friedrichstrasse 21
W-6228 Eltville(DE)**

(72) Erfinder: **Schultz, Ludwig, Dr.
Amselweg 22
W-8526 Bubenreuth(DE)**
Erfinder: **Pohl, Ludwig
Ernst-Reuter-Strasse 72
W-6054 Rodgau 5(DE)**
Erfinder: **Gaube, Franz
Hans-Sachs-Strasse 13
W-8522 Herzogenaurach(DE)**

(74) Vertreter: **Quermann, Helmut, Dipl.-Ing.
Postfach 6145 Gustav-Freytag-Strasse 25
W-6200 Wiesbaden(DE)**

## Beschreibung

Die Erfindung betrifft eine elektrische Sicherungseinrichtung, insbesondere für Hochspannungs- und/oder Hochstrom-Geräte, welche mindestens einen Schmelzleiter enthält, der auf einem Trägerkörper aufgewickelt und zumindest teilweise um eine das Ansprechen der Sicherungseinrichtung anzeigende Vorrichtung angeordnet ist, welche einen beweglichen Bolzen aufweist, der zum Spannen einer Federeinrichtung mit vorbestimmter Spannkraft über einen mit ihm verbundenen, beim Ansprechen der Sicherungseinrichtung unter der Spannkraft zerreißenden Spanndraht vorgesehen und mit dem gegebenenfalls eine zugeordnete Schalteinrichtung zu betätigen ist. Eine derartige Sicherungseinrichtung ist in dem Siemens-Katalog HG 12 (1979): "Hochspannungsschaltgeräte bis 36 kV; Lasttrennschalter, HH-Sicherungen", Teil 2 beschrieben.

Hochspannungs-Hochleistungs-Sicherungen (HH-Sicherungen) werden als Kurzschlußschutz in Hochspannungsschaltanlagen für Frequenzen von 50 oder 60 Hz verwendet. Vor Transformatoren, Kondensatoren oder Kabelabzweigen eingesetzt, schützen sie Geräte und Anlagenteile vor der dynamischen und thermischen Wirkung hoher Kurzschlußströme, indem sie diese Geräte oder Anlagenteile bereits im Entstehen der genannten Ströme ausschalten. Derartige Sicherungseinrichtungen eignen sich jedoch nicht als Überlastungsschutz, da sie erst ab einem vorbestimmten kleinsten Ausschaltstrom mit Sicherheit einen Schaltvorgang auslösen können. Dieser kleinste Ausschaltstrom liegt im allgemeinen bei dem 2,5- bis 3fachen Nennstrom. Ein Strom im Bereich zwischen dem Nennstrom und dem Ausschaltstrom wird also mit dieser Art von Sicherungseinrichtungen nicht abgeschaltet. In diesem Strombereich sind folglich die Sicherungseinrichtungen als auch das von ihr zu schützende Gerät oder Anlagenteil einer thermischen Überlastung ausgesetzt. Aus diesem Grunde werden vielfach für diesen Strombereich zusätzliche Schutzmaßnahmen vorgesehen.

Die aus der eingangs genannten Veröffentlichung zu entnehmende Hochspannungs-Sicherungseinrichtung enthält einen oder mehrere parallelgeschaltete Bandschmelzleiter mit Engstellenbereichen, die auf einem keramischen Rohr mit sternförmigem Querschnitt aufgewickelt sind. Im Innenraum dieses Rohres ist eine ebenfalls rohrförmige Vorrichtung angeordnet, die als Schlagvorrichtung bezeichnet wird, einseitig offen ist und einen beweglichen Schlagstift oder -bolzen aufweist. Dieser Schlagbolzen ist bis zu seinem tellerförmigen Kopfteil mittels eines Spanndrahtes in die Schlagvorrichtung eingezogen, wobei er eine Druckfeder mit vorbestimmter Spannkraft zusammenpreßt. Der Spanndraht liegt dabei in einem parallelen Strompfad zu dem Schmelzleiter. Da er einen wesentlich höheren Widerstand als der Schmelzleiter selbst aufweist, wird er im Betriebsfall nur von einem sehr kleinen Strom durchflossen. Entsteht jedoch in einem Kurzschlußfall ein Lichtbogen an einer oder mehreren der dann durchgeschmolzenen Engstellen des Schmelzleiters, so fließt folglich aufgrund der Lichtbogenspannung ein für ein Schmelzen oder Verdampfen des Spanndrahtes ausreichender Strom durch diesen Draht. Die Druckfeder kann sich dann entspannen, wobei sie den Schlagbolzen aus der entsprechenden Stirnseite der Sicherungseinrichtung bzw. der Schlagvorrichtung herausstößt. Dadurch wird das Ansprechen der Sicherungseinrichtung angezeigt. Außerdem kann der Schlagbolzen einen besonderen Schaltzustandsgeber der Sicherungseinrichtung oder eine Auslösevorrichtung eines der Sicherungseinrichtung zugeordneten Lasttrennschalters betätigen.

Aus der DE-A-1 463 655 ist eine elektrische Sicherungseinrichtung, insbesondere für Hochspannungsgeräte, bekannt, welche mindestens einen Schmelzleiter enthält, der teilweise um eine das Ansprechen der Sicherungseinrichtung anzeigende Vorrichtung angeordnet ist, welche einen beweglichen Bolzen aufweist, der zum Spannen einer Federeinrichtung mit vorgestimmter Spannkraft über einen mit ihm verbundenen, beim Ansprechen der Sicherungseinrichtung unter der Spannkraft zerreißenden Spanndraht vorgesehen und mit dem gegebenenfalls eine zugeordnete Schalteinrichtung zu betätigen ist. Aus dieser Druckschrift ist ferner eine Sicherungseinrichtung bekannt, bei der der Spanndraht durch eine Klinke in Verbindung mit einem Bimetallstreifen ersetzt ist. Biegt sich der Bimetallstreifen bei Erwärmung, so wird bei einer Temperatur, die einer bestimmten Strombelastung im Überlastgebiet entspricht, die Verklinkung gelöst, und damit der bewegliche Bolzen durch die Federeinrichtung ausgelöst.

Aufgabe der vorliegenden Erfindung ist es nun, die eingangs genannte Sicherungseinrichtung derart weiterzubilden, daß sie nicht nur beim Durchschmelzen des Schmelzleiters, sondern auch bei thermischer Überlastung unterhalb des zum Durchschmelzen des Schmelzleiters führenden Ausschaltstromes bei Überschreiten einer zuvor festlegbaren Temperatur anspricht und somit gegebenenfalls mittels einer in Reihe gelegten Schalteinrichtung einen Stromkreis unterbricht.

Diese Aufgabe wird erfindungsgemäß dadurch gelöst, daß zumindest ein Teil der Federeinrichtung aus einem Federelement gebildet ist, das aus einer Legierung mit einem derartigen temperaturabhängigen Formänderungsverhalten besteht, daß beim Überschreiten einer vorbestimmten kritischen Temperatur aufgrund einer entsprechenden Heizleistung des Schmelzleiters bei dessen Überlastung eine solche Ausdehnung des Federelementes eintritt, daß eine die Zerreißspannung des Spanndrahtes überschreitende Kraft verursacht ist.

Die mit dieser Ausgestaltung der Sicherungseinrichtung verbundenen Vorteile sind insbesondere darin zu sehen, daß aufgrund der Verwendung eines solchen besonderen Federelementes auch ein thermischer Überlastungsschutz für den Bereich zwischen dem Nennstrom und dem Ausschaltstrom der Sicherungseinrichtung zu erreichen ist.

Fließt nämlich durch die Sicherungseinrichtung, d.h. durch ihren Schmelzleiter, ein Strom, der größer als der Nennstrom, aber kleiner als der Ausschaltstrom ist, bei dem ein Durchschmelzen des Schmelzleiters erfolgt, so erwärmt sich der Schmelzleiter dementsprechend. Wegen der damit verbundenen Heizwirkung des Schmelzleiters wird das besondere Federelement durch Wärmeleitung oder durch Konvektion soweit erwärmt, daß es seine kritische Temperatur überschreitet und seine ihm eingeprägte, beispielsweise ausgedehntere Form wieder anzunehmen bestrebt ist. Aufgrund der damit verbundenen Erhöhung der Zugspannung über die Zerreißspannung des Spanndrahtes hinaus wird der Bolzen freigegeben, der seinerseits eine vorgelagerte Auslösevorrichtung einer Schalteinrichtung betätigen kann. Daneben wird auch die bekannte Funktion des Spanndrahtes, nämlich einen durchgebrannten Schmelzleiter anzuzeigen, nach wie vor erfüllt. Entsteht nämlich bei einem Durchschmelzen des Schmelzleiters ein Lichtbogen in der Sicherungseinrichtung, so fließt wegen der Lichtbogenspannung ein Strom über den Spanndraht, der diesen zum Aufschmelzen bringt, so daß durch dessen Zerreißen der Anzeigemechanismus ausgelöst wird.

Vorteilhafte Ausgestaltungen der erfindungsgemäßen Sicherungseinrichtung gehen aus den Unteransprüchen hervor.

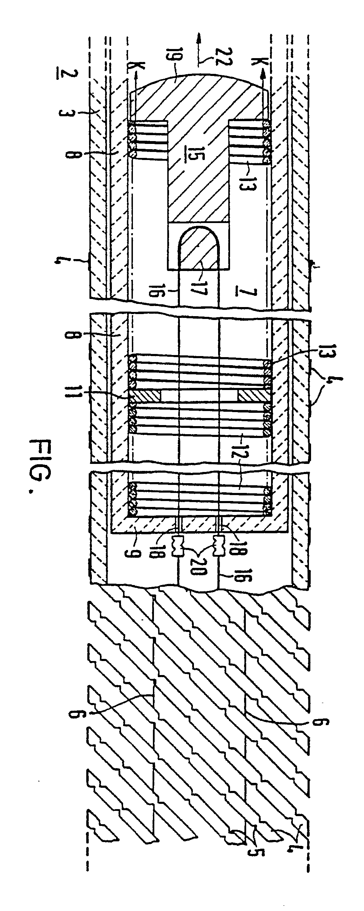

Zur weiteren Erläuterung der Erfindung wird auf die Zeichnung Bezug genommen. In der einzigen Figur ist eine Ausführungsformen der erfindungsgemäßen Sicherungseinrichtung schematisch veranschaulicht

Bei der in der Figur als Längsschnitt nur teilweise ausgeführten Sicherungseinrichtung wird von bekannten Ausführungsformen ausgegangen, die neben mindestens einem Schmelzleiter eine besondere Schlagvorrichtung zum Anzeigen des Ansprechens der Sicherungseinrichtung sowie zu einer eventuellen mechanischen Auslösung einer Schalteinrichtung aufweisen (vgl. z.B. die in dem eingangs genannten Prospekt aufgeführten Sicherungen).

Die in der Figur allgemein mit 2 bezeichnete Sicherungseinrichtung enthält einen beispielsweise in einem in der Figur nicht ausgeführten Porzellanrohr angeordneten rohrförmigen Trägerkörper 3, der z.B. aus keramischen Material besteht, einen etwa sternförmigen Querschnitt aufweist und mit Rippen 6 versehen ist. Auf diesen Trägerkörper 3 ist ein bandförmiger Schmelzleiter 4 aufgewickelt, der in bekannter Weise mit Engstellenbereichen 5 versehen ist. Gegebenenfalls können auch mehrere derartige parallelgeschaltete Schmelzleiter vorgesehen werden. Der oder die Schmelzleiter 4 werden dabei im allgemeinen allseitig in ein feinkörniges Löschmittel wie z.B. Quarzsand eingebettet. Innerhalb des rohrförmigen Trägerkörpers 3 mit dem Schmelzleiter 4 ist eine besondere mechanische Vorrichtung 7 angeordnet, mit der das Ansprechen der Sicherungseinrichtung zur Anzeige gebracht werden kann. Mittels dieser auch als Schlagvorrichtung bezeichneten Vorrichtung 7 läßt sich gegebenenfalls auch der Auslösemechanismus einer zugeordneten Schalteinrichtung wie z.B. eines Lasttrennschalters betätigen.

Die Anzeige- bzw. Schlagvorrichtung 7 weist ein auf einer Seite offenes Hüllrohr 8 auf, das auf der gegenüberliegenden Seite mit einem festen Bodenteil 9 abgeschlossen ist. In das Hüllrohr ist von der offenen Seite her eine Federeinrichtung eingebracht, die sich gemäß dem dargestellten Ausführungsbeispiel aus zwei hintereinandergereihten, über eine Ringscheibe 11 getrennten schraubenförmigen Federelementen 12 und 13 zusammensetzt. Diese beiden Federelemente sind mittels eines im Längsschnitt T-förmigen Schlagstiftes 15, der auch als Schlagbolzen bezeichnet wird, zusammenzudrücken. Hierzu dient ein besonderer Spanndraht 16, der mit dem Fußteil 17 des Schlagbolzens 15 verbunden und durch Bohrungen 18 in dem festen Bodenteil 9 hindurchgeführt ist. Über diesen Spanndraht 16 kann man dann den Schlagbolzen 15 in das Hüllrohr einziehen, wobei über den Kopfteil 19 des Bolzens die Federeinrichtung zusammengedrückt wird. In dieser Position läßt sich dann der Spanndraht mittels außerhalb des Hüllrohres 8 anzubringender Quetschhülsen 20 fixieren.

Gemäß der Erfindung soll entweder die gesamte Federeinrichtung oder, wie gemäß der ausführungsform angenommen, nur ein Federelement von ihr, beispielsweise die an dem Bodenteil 9 des Hüllrohres 8 anliegende Druckfeder 12, aus einer Legierung mit einem besonderen temperaturabhängigen Formänderungsverhalten bestehen, das den sogenannten Formgedächtnis-Effekt (Memory-Effekt) aufweist (vgl. z.B. Veröffentlichung der Firma G.Rauh, Pforzheim: Gedächtnis-Effekt und technisch anwendbare Legierungen). Unter dem Memory-Effekt versteht man dabei die Eigenschaft von Bauteilen aus bestimmten Legierungen, sich bei Überschreiten einer vorbestimmten kritischen Temperatur an ihre ursprünglich eingeprägte Form zu erinnern und diese wieder einzunehmen. Die entsprechenden Legierungen werden deshalb auch als Formgedächthislegierungen bezeichnet. Man unterscheidet dabei zwischen Ein- und Zweiwegeffekt. Beim Einwegeffekt wird die ursprüngliche Form nur einmal beim Erwärmen wieder angenommen, während beim Zweiwegeffekt ein reversibles temperaturabhängiges Formänderungsverhalten vorliegt.

Besonders geeignet sind drei Legierungsgruppen mit Formgedächtnis-Eigenschaften, nämlich
Cu-Zn-Al,
Cu-Al-Ni bzw. Cu-Al-Ni-Ti und
Ni-Ti bzw. Ni-Ti-Cu.
Die sogenannte Auslöse (A$_S$)-Temperatur, bei der die Formänderung beim Aufheizen einsetzt, kann durch die Wahl der Legierungspartner und deren Konzentration sowie die weitere Vorbehandlung über weite Bereiche eingestellt werden. Die maximalen A$_S$-Werte bekannter Legierungen sind im allgemeinen auf ein Temperaturintervall bis etwa 200°C begrenzt, so daß die erfindungsgemäße Sicherungseinrichtung vorteilhaft für einen Temperaturbereich zwischen Raumtemperatur und 200°C zu konzipieren ist. Für den Temperaturbereich bis 120°C eignen sich besonders Cu-Zn-Al-Legierungen, während Ni-Ti oder Ni-Ti-Cu-Legierungen bis etwa 100°C einsetzbar sind. Für gewünschte Temperaturen bis zu 170°C oder gegebenenfalls 200°C kommen insbesondere Cu-Al-Ni- und Cu-Al-Ni-Ti-Legierungen in Frage. Im Hinblick auf die jeweiligen Einsatzbedingungen ist auch das Korrosions- und Oxidationsverhalten der verwendeten Legierung zu beachten. Unter Umständen empfiehlt sich eine zusätzliche Oberflächenvergütung des aus dieser Legierung gefertigten Federelementes.

Aufgrund oder erfindungsgemäßen Ausgestaltung der Sicherungseinrichtung 2 wird nicht nur eine Schlagauslösung in der durch einen Pfeil 22 angedeuteten Wirkungsrichtung des Schlagbolzens 15 beim Durchschmelzen des Schmelzleiters 4 und dem damit verbundenen Durchschmelzen des Spanndrahtes 16 erreicht; sondern die Schlagvorrichtung 7 spricht auch bei thermischer Überlastung, d.h. beim Überschreiten einer festlegbaren Temperatur in dem genannten Temperaturbereich an. Der thermische Überlastungsschutz ist hierbei dadurch gegeben, daß sich die zunächst völlig zusammengedrückten Federeinrichtung mit ihrer besonderen Feder 12 aus der vorbestimmten Legierung bei einer Erwärmung innerhalb eines bestimmten Temperaturintervalls, das sich typischerweise über weniger als 10°C erstreckt, ausdehnt. Aufgrund dieser Ausdehnung wird eine die Zerreißspannung des Spanndrahtes 16 überschreitende Kraft K auf den Schlagbolzen 15 und somit auf den Spanndraht 16 selbst verursacht, so daß der Draht unter dieser Kraft K zerreißt. Die hierfür erforderliche Erwärmung der Feder 12 geschieht durch Wärmeleitung bzw. Konvektion aufgrund eines Stromes, der größer als der für den Schmelzleiter 4 festgelegte Nennstrom, jedoch kleiner als der Ausschaltstrom ist.

Neben dieser Funktion der erfindungsgemäßen Sicherungseinrichtung bei Überlastung wird die bei bisher bekannten Ausführungsformen ausgeübte Funktion des Spanndrahtes, nämlich die Anzeige einer durchgebrannten Sicherungseinrichtung, nach wie vor erfüllt. Entsteht nämlich ein Lichtbogen aufgrund eines Durchbrennens des Schmelzleiters, so fließt wegen der Lichtbogenspannung ein so hoher Strom durch den Spanndraht, daß dieser über seine Schmelztemperatur hinaus erhitzt wird, zerreißt und somit den Anzeigemechanismus auslöst.

Gemäß einem konkreten Ausführungsbeispiel einer erfindungsgemäßen Sicherungseinrichtung wurde als Spanndraht 16 ein Stahldraht mit einem Durchmesser von 0,15 mm gewählt. Der Spanndraht war dabei in bekannter Weise nach Art eines Flaschenzuges mit einem Flaschenzugfaktor 2 gespannt. Als Feder 13 der Federeinrichtung wurde eine Stahlfeder verwendet, die im zusammengedrückten Zustand eine Druckkraft von etwa 5 kp erzeugte. Die Feder 12 bestand aus einer CuZnAl-Legierung, die zwischen 70 und 80°C ihre Formänderung vornimmt. Die zum Zerreißen des einfach gespannten Drahtes benötigte Kraft betrug etwa 4 kp, so daß demnach in der Anordnung als 2-fach-Flaschenzug erst eine Kraft von mindestens 8 kp zum Zerreißen des Drahtes führte.

Das Prinzip eines thermischen Überlastungsschutzes bei elektrischen Sicherungseinrichtungen der eingangs genannten Art durch Verwendung eines besonderen Federelementes aus einer Formgedächtnislegierung ist natürlich nicht nur auf eine Anwendung bei Hochspannungs-Hochleistungs-Sicherungen beschränkt. Generell ist dieses Prinzip überall dort anwendbar, wo eine thermische Überlastung von Schmelzleitern unterhalb ihres zu ihrem Durchschmelzen ausreichenden angezeigt und/oder bei dieser thermischen Überlastung eine zugeordnete Schalteinrichtung mechanisch betätigt werden soll.

**Patentansprüche**

1. Elektrische Sicherungseinrichtung, insbesondere für Hochspannungs- und/oder Hochstrom-Geräte, welche mindestens einen Schmelzleiter enthält, der auf einem Trägerkörper aufgewickelt und zumindest teilweise um eine das Ansprechen der Sicherungseinrichtung anzeigende Vorrichtung angeordnet ist, welche einen beweglichen Bolzen aufweist, der zum Spannen einer Federeinrichtung mit vorbestimmter Spannkraft über einen mit ihm verbundenen, beim Ansprechen der Sicherungseinrichtung unter der Spannkraft zerreißenden Spanndraht vorgesehen und mit dem gegebenenfalls eine zugeordnete Schalteinrichtung zu betätigen ist, **dadurch gekennzeichnet, daß** zumindest ein Teil der Federeinrichtung von einem Federelement (12) gebildet ist, das aus einer Legierung mit einem derartigen temperaturabhängigen Formänderungsverhalten besteht, daß beim Überschreiten einer vorbestimmten kritischen Temperatur aufgrund einer entsprechenden Heizleistung des Schmelzleiters (4) bei dessen Überlastung eine solche Ausdehnung des Federelementes (12) eintritt, daß eine die Zerreißspannung des Spanndrahtes (16) überschreitende Kraft (K) verursacht ist.

2. Sicherungseinrichtung nach Anspruch 1, **dadurch gekennzeichnet, daß** die Federeinrichtung aus einer schraubenförmigen Druckfeder (13) und dem entsprechend gestalteten Federelement (12) zusammengesetzt ist.

3. Sicherungseinrichtung nach Anspruch 1 oder 2, **dadurch gekennzeichnet, daß** das Federelement (12) aus einer Formgedächtnislegierung mit Einweg- oder Zweiweg-Gedächtniseffekt besteht.

4. Sicherungseinrichtung nach einem der Ansprüche 1 bis 3, **dadurch gekennzeichnet, daß** das Federelement (12) aus der besonderen Legierung mit einer Oberflächenvergütung versehen ist.

## Claims

1. Electrical cutout device, in particular for high-voltage and/or high-current appliances, which contains at least one fusible element which is wound on a support body and is disposed at least partially around a mechanism indicating the blowing of the cutout device, which mechanism has a movable bolt which, to tension a spring device, is provided with a predetermined tensioning force by means of a tensioning wire which is connected to it and ruptured under the tensioning force if the cutout device blows and with which an associated switching device can optionally be actuated, characterised in that at least a part of the spring device is formed by a spring element (12) which is composed of an alloy having a temperature-dependent deformation behaviour which is such that, if a predetermined critical temperature is exceeded owing to a corresponding heat output of the fusible element (4) when it is overloaded, an expansion of the spring element (12) occurs which is such that a force (K) is produced which exceeds the rupture tension of the tensioning wire (16).

2. Cutout device according to Claim 1, characterised in that the spring device is made up of a helical compression spring (13) and the correspondingly shaped spring element (12).

3. Cutout device according to Claim 1 or 2, characterised in that the spring element (12) is composed of a shape-memory alloy with one-way or two-way memory effect.

4. Cutout device according to any of Claims 1 to 3, characterised in that the spring element (12) made of the special alloy is provided with a surface coating.

## Revendications

1. Dispositif électrique de sécurité, en particulier pour appareils à haute tension et /ou à courants forts, qui contient au moins un conducteur fusible, enroulé sur un corps servant de support et disposé au moins partiellement autour d'un dispositif indiquant si le dispositif de sécurité a fonctionné, et qui possède un percuteur mobile qui sert à tendre un dispositif à ressort avec une force de tension prédéterminée au moyen d'un fil tendeur relié à lui, se rompant sous l'effet de la force de tension lors de l'activation du dispositif de sécurité et que l'on actionne, le cas échéant, avec un dispositif de commutation associé, caractérisé en ce que au moins une partie du dispositif à ressort est formée d'un élément à ressort (12), qui est constitué par un alliage dont, la forme peut se modifier en fonction de la température de telle façon que lorsque la température franchit une valeur critique prédéterminée, il se produit une telle détente de l'élément à ressort (12) du fait de la surcharge du conducteur fusible (4), en raison de l'échauffement correspondant de celui-ci, qu'il se crée une force (k) qui dépasse la tension de rupture du fil tendeur (16).

2. Dispositif de sécurité la revendication 1, caractérisé en ce que le dispositif à ressort est composé d'un ressort (13) hélicoïdal et d'un élément à ressort (12) de configuration correspondante.

3. Dispositif de sécurité selon les revendications 1 ou 2, caractérisé en ce que l'élément à ressort (12) consiste en un alliage morpho-mnémonique avec un effet de mémoire à simple ou double effet.

4. Dispositif de sécurité selon l'une des revendications 1 à 3, caractérisé en ce que, l'élément à ressort (12) en alliage spécial a bénéficié d'un traitement de surface.

FIG.